# EUROPEAN PATENT SPECIFICATION

(11) **EP 3 319 298 B1**
(45) Date of publication and mention of the grant of the patent: **13.01.2021**
(21) Application number: 16816994.4
(22) Date of filing: 18.04.2016
(51) Int. Cl.: H04L 12/14, H04W 4/24, G06F 21/10, H04L 29/08, H04L 29/06, H04L 12/24

(54) **METHOD AND APPARATUS FOR SHARING LICENSE RESOURCE BETWEEN MULTIPLE VIRTUAL NETWORK FUNCTIONS**
VERFAHREN UND VORRICHTUNG ZUR GEMEINSAMEN NUTZUNG EINER LIZENZRESSOURCE ZWISCHEN MEHREREN VIRTUELLEN NETZWERKFUNKTIONEN
PROCÉDÉ ET APPAREIL POUR LE PARTAGE DE RESSOURCES DE LICENCE ENTRE PLUSIEURS FONCTIONS DE RÉSEAU VIRTUEL

(30) Priority: 30.06.2015 CN 201510372606
(43) Date of publication of application: 09.05.2018
(73) Proprietor: ZTE Corporation, Shenzhen, Guangdong 518057 (CN)
(72) Inventor: ZHANG, Maopeng, Shenzhen Guangdong 518057 (CN)
(74) Representative: Regimbeau
(86) International application number: PCT/CN2016/079594
(87) International publication number: WO 2017/000630

(56) References cited:
- WO-A1-2009/030135
- CN-A- 101 119 317
- CN-A- 101 640 589
- US-A- 5 260 999
- US-A1- 2014 201 374
- US-A1- 2014 317 261
- US-A1- 2014 366 162
- US-A1- 2014 379 593
- US-B1- 8 955 099
- "Network Function Virtualization (NFV) Management and Orchestration;GS NFV-MAN 001", ETSI DRAFT; GS NFV-MAN 001, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, no. V0.6.3, 22 September 2014 (2014-09-22), pages 1-197, XP014216374, [retrieved on 2014-09-22]

## Description

### Technical Field

The present application relates, but is not limited, to the field of network function virtualizations, and in particular relates to a method for sharing a license resource between multiple Virtual Network Functions (VNF) and a corresponding license orchestrator.

### Background

In the current telecommunication field, equipment vendors provide a license for each network element as a resource limit for this network element. During a planning phase, operators schematize the license for each network element, purchase the license from the equipment vendors according to the schematization, and deploy the license to the network elements when network element is deployed.

When running on actual network elements, actual loads of many network elements are actually much below than schematized capacities of the licenses, causing part of the resource of the license schematization to be idle. However, when a new network element is online or services in some regions are rapidly developing, the network element resource will exceed a maximum limit of the resource of the license schematization, so that the license is needed to be expanded urgently. However, these network elements cannot be acquired and allocated from idle resources, thereby causing that the operators need to purchase licenses again from the equipment vendors and thus improving operation costs. Further relevant technologies are also known from WO 2009/030135 A1 (HUAWEI TECH CO LTD [CN];LU WEN [CN];XIE YONGZHENG [CN]) 12 March 2009 (2009-03-12) which relates to method, device and system for assigning license; "Network Function Virtualization (NFV) Management and Orchestration; GS NFV-MAN 001", ETSI DRAFT; GS NFV-MAN 001, EUROPEAN TELECOMMUNICATIONS STANDARDS INSTITUTE (ETSI), 650, ROUTE DES LUCIOLES; F-06921 SOPHIA-ANTIPOLIS; FRANCE, vol. ISG-NFV, no. V0.6.3, 22 September 2014 (2014-09-22), pages 1-197, XP014216374; and US 2014/317261 A1 (SHATZKAMER KEVIN [US] ET AL) 23 October 2014 (2014-10-23) which relates that defining interdependent virtualized network functions for service level orchestration.

### Summary

The present invention is defined by the appended independent claims. Dependent claims constitute embodiments of the invention. Any other subject-matter outside the scope of protection of the claims is to be regarded as examples not in accordance with the invention.

### Brief Description of Drawings

FIG. 1 is a schematic diagram showing a license resource management for multiple VNF instances according to an example useful for understanding the invention.
FIG. 2 is a flowchart of a method for sharing license resource between multiple VNF instances according to the example of the present invention.
FIG. 3 is a module diagram of a license orchestrator according to the example of the present invention.
FIG. 4 is a collaboration flowchart of an application example 1.
FIG. 5 is a collaboration flowchart of an application example 2.
FIG. 6 is a flowchart of resource allocation when a VNF instance is added according to an application example 3 of the present invention.
FIG. 7 is a flowchart of resource recovery when a VNF instance is deleted according to an application example 4 of the present invention.

### Detailed Description

Hereinafter, embodiments of the present invention are described in detail with reference to the accompanying drawings. It should be noted that, in the case of no conflict, embodiments of the present application and characteristics in the embodiments may be arbitrarily combined with each other.

Example useful for understanding the invention

After network functions are virtualized, a virtual network element system applies for resources and runs as required, and the virtual network element itself also supports a creation and deletion. These operations can be done at a software level in the case of sufficient physical resources. In this example, a license orchestrator is newly added to flexibly allocate and adjust the VNF license resource according to requirements, such that a problem that the license cannot be shared between multiple VNFs is solved, thereby reducing operation costs for refining the license resource operation by the operator. The license orchestrator may be deployed in one or more of an Operation Support System (OSS), a Network Function Virtualization Orchestrator (NFVO), a Virtualized Network Function Manager (VNFM), a Network Element Manager (EM) or a new added entity.

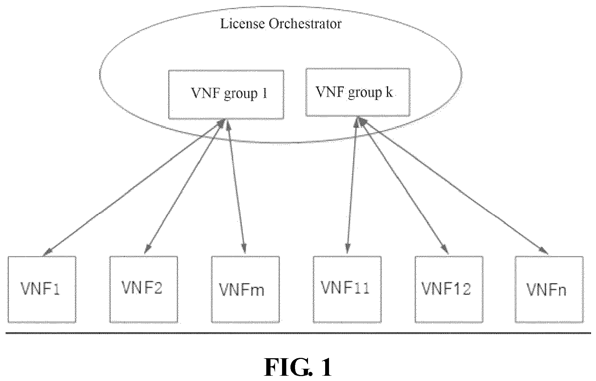

In this example, the license orchestrator is employed for orchestrating license resources of VNF instances. For a basic principle, reference can be made with FIG. 1. The network element instances sharing a license resource are grouped into a VNF group. Two VNF groups are exemplarily shown in the drawings. The VNF instances within the VNF group share the license resource. The license orchestrator allocates or reallocates the license resource shared by the VNF group between the VNF instances within the VNF group, and authorizes each VNF instance to use the license resource and validate the license resource in the VNF instance.

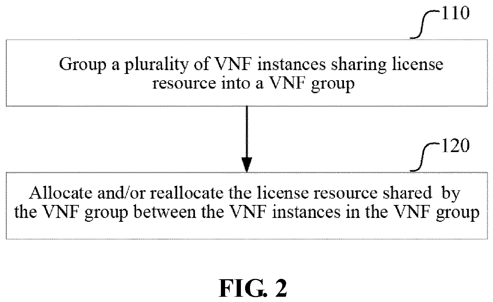

The method for sharing a license resource between multiple VNFs in this example is shown in FIG. 2 and can be applied to the license orchestrator. The method includes the following steps.

In step 110, a plurality of VNF instances sharing a license resource are grouped into a VNF group.

When grouped, the VNF instance's license resource may or may not have been allocated yet, and the VNF instance may already exist or may be new schematized, which is not limited in this application.

In this example, a plurality of VNF instances that belong to a same manufacturer and/or have a same network function may be grouped into a group. For example, ZTE Call Session Control Function (CSCF) network elements are grouped into a group, ZTE Supplementary Service Server (SSS) network elements are grouped into a group, and the like, which however, is not limited in this example.

In step 120, the license resource shared by the VNF group is allocated and/or relocated between the plurality of VNF instances in the VNF group.

As the license resource is allocated between the VNF instances in the VNF group, different strategies such as an on-demand allocating strategy, and an on-plan allocating strategy, etc., may be employed. After allocating, the license resource shared by the VNF group may all be allocated to the VNF instances in the VNF group, or a part of license resource may be reserved as an idle resource.

When the on-demand allocating strategy is employed, the license resource to be allocated to each VNF instance in the VNF group is determined by a current capacity of the VNF instance. That is, the capacity of allocated license resource is determined by the capacity of license resource actually needed by VNF instance. Apparently, the total capacity allocated to all the VNF instances in the VNF group should not be greater than the total capacity of the license resource shared by the VNF group. In such the strategy, the current capacity may be increased by a certain margin according to a safety factor when determining the capacity of the license resource needed by the VNF instance, and also the allocation may be performed according to the maximum capacity borne by the VNF instance when the capacity of the VNF instance is flexibly changed. The specific strategy is not limited in the present application, but is generally base on the actual requirements. When VNF instances compete for the license resource, weight competition options may be provided.

When the on-plan allocating strategy is employed, the license resource to be allocated to each VNF instance in the VNF group is determined by a planning for the total capacity of the license resources shared by the VNF group. That is, the capacity of each VNF instance is planned and orchestrated manually in advance based on the total capacity of the license resource.

For example, when the total capacity of the license resource shared by the VNF group is 100 and the number of VNF instances in the group is 5, 20 capacity of the license resource may be allocated and orchestrated to each VNF instance. The capacity of the allocated and orchestrated license resource may be much greater than the current capacity of the VNF instance.

With respect to the license resources shared by the VNF group, there are many cases where the license resource is reallocated between the VNF instances in the VNF group. For example, the license resource of the VNF instance in the group is not sufficient, a new VNF is added to the group, an administrator believes it is necessary to perform reallocation, and the like. Examples are illustrated as follow.

### Example 1

The current capacities of the VNF instances in the VNF group are monitored. If the current capacity of a certain VNF instance in the VNF group reaches an upper limit limited by the license resource thereof, a new license resource is allocated to the VNF instance. A new added part of the new license resource with respect to an original license resource is obtained from one or more of an idle resource of the license resource shared by the VNF group, an idle part of the license resource of other VNF instances in the VNF group and a new purchased license resource.

In this example, when there exists a VNF instance of which the current capacity reaches the upper limit limited by the license resource thereof, the capacity of the new license resource to be allocated to the VNF instance may be determined based on the current capacity and a safety strategy; or, the capacity of the license resource may be planed again according to weights and a current capacity remaining condition, in order to determine the capacity of the new license resource to be allocated to the VNF instance. The plan may be schematized and adjusted manually, or be automatically calculated using a predetermined strategy. In these strategies, an upper limit and a lower limit of a capacity adjustment-plan ratio of the VNF, a safety factor between VNF actual capacity and license capacity, a license adjusting and polling strategy, a license adjustment weight strategy, and so on, can be set.

### Example 2

When a new VNF instance is added to the VNF group, the new VNF instance is allocated a license resource firstly. The new allocated license resource is obtained from one or more of an idle resource of the license resource shared by the VNF group and a new purchased license resource.

Likewise, the capacity of the license resource to be allocated to the new VNF instance firstly may also be determined according to the current capacity, a planning, or other strategies.

The license orchestrator may be deployed in the OSS, NFVO, VNFM, or a network element management system (EMS), or may be deployed separately, which is not limited therein. When deployed at different places, management ranges may be different. For example, the license resources of the VNF instances from the same manufacturer and the VNF instances from different manufacturers may be managed when they are deployed in OSS and NFVO; the VNF instances from the same manufacturer (such as the vendor of the network element device) may be managed when deployed in EMS and a dedicated VNFM; the VNF instances from the different manufacturers may be managed by a general VNFM.

The license orchestrator may have an authority to make licenses for the VNF instances, or have no authority to make licenses for the VNF instances. If the license orchestrator has the authority to make licenses, after locating or relocating the license resource shared by the VNF group between the VNF instances in the VNF group, the license orchestrator may make a license according to the license resource allocated or reallocated to the VNF instances in the VNF group and distribute the license to the corresponding VNF instance. If the license orchestrator has no authority to make licenses, the license orchestrator may generate a license resource notification message according to the license resource allocated or reallocated to the VNF instances in the VNF group and send the license resource notification message to the corresponding VNF instance.

After the VNF instance is deleted, the license orchestrator recovers the license resource occupied by the deleted VNF instance.

Although the foregoing is illustrated by taking one VNF group as an example, the license orchestrator may also orchestrate multiple VNF groups, and in each VNF group, the license resource can be shared among multiple VNFs according to the above manners.

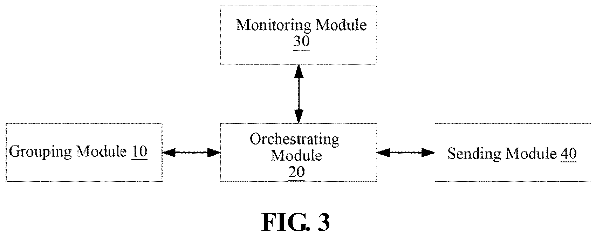

As shown in FIG. 3, the license orchestrator provided by this example includes: a grouping module 10 and an orchestrating module 20.

The grouping module 10 is configured to group a plurality of VNF instances sharing a license resource into a VNF group.

The orchestrating module 20 is configured to allocate and/or reallocate the license resource shared by the VNF group between the plurality of VNF instances in the VNF group.

Optionally, The configuration that the orchestrating module allocates the license resource shared by the VNF group between the plurality of VNF instances in the VNF group includes:

determine the license resource to be allocated to the each of the plurality of VNF instances in the VNF group, based on a current capacity of the VNF instance; or

determine the license resource for each of the plurality of VNF instances in the VNF group, based on a planning for a total capacity of the license resource shared by the VNF group.

The license orchestrator further includes a monitoring module 30 configured to monitor current capacities of the plurality of VNF instances in the VNF group.

The configuration that the orchestrating module reallocates the license resource shared by the VNF group between the plurality of VNF instances in the VNF group includes: if the current capacity of one of the plurality of VNF instances in the VNF group reaches an upper limit limited by the license resource thereof, allocate a new license resource to the VNF instance. A new added part of the new license resource with respect to an original license resource is obtained from any one or more of an idle resource of the license resource shared by the VNF group, an idle part of the license resource of other VNF instances in the VNF group and a new purchased license resource.

Optionally, the configuration that the orchestrating module reallocates the license resource shared by the VNF group between the plurality of VNF instances in the VNF group includes: allocates, when a new VNF instance is added to the VNF group, a license resource to the new VNF instance firstly. The firstly allocated license resource is obtained from any one or more of an idle resource of the license resource shared by the VNF group, an idle part of the license resource of other VNF instances in the VNF group and a new purchased license resource.

Optionally, the license orchestrator further includes a sending module 40 configured to:
make a license according to the license resource allocated or reallocated between the plurality of VNF instances in the VNF group and distribute the license to the corresponding VNF instance;
or generate a license resource notification message according to the license resource allocated or reallocated between the plurality of VNF instances in the VNF group and send the license resource notification message to the corresponding VNF instance.

Optionally, the license orchestrator further includes a recovering module configured to when it is informed that a VNF instance is deleted, recovery the license resource occupied by the deleted VNF instance.

Optionally, the license orchestrator is deployed in any one or more of an Operation Support System (OSS), a Network Function Virtualization Orchestrator (NFVO), a Virtualized Network Function Manager (VNFM), a Network Element Manager (EM), or a new added entity.

Optionally, the plurality of VNF instances sharing the license resource belong to a same manufacturer and/or have a same network function.

Illustrations are set forth below in further conjunction with several application examples.

### Application example 1

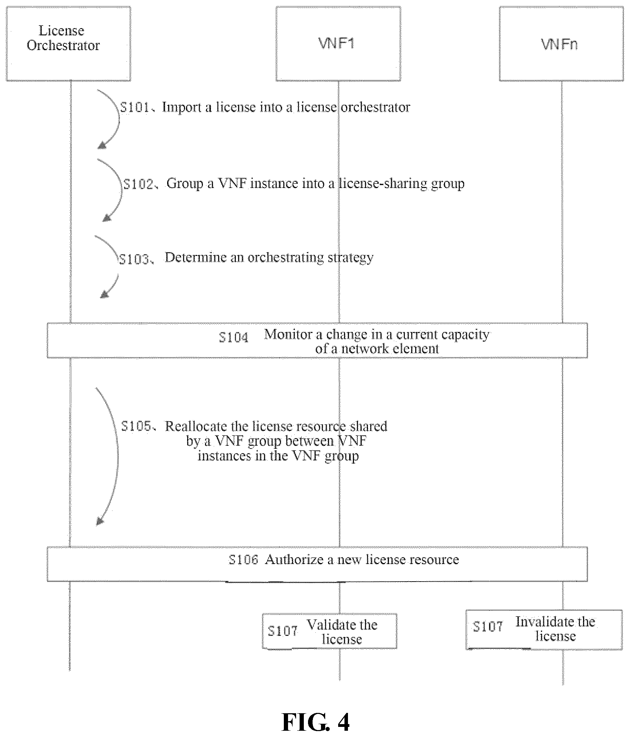

In this application example, the license orchestrator can uniformly distribute license resource and make a license. When the license orchestrator and the VNF licenses belong to the same manufacturer, the cooperation flowchart is shown in FIG. 4.

At step S101, a "licesne" is imported into the license orchestrator (referred to orchestrator for brief in the drawings). The "licesne" may be purchased from an operator.

At step S102, the VNFs using the "licesne" are grouped by the license orchestrator. The VNF instances sharing the license resource may be grouped into a VNF group, or may be referred to as a "licesne" sharing group as shown in the drawings.

At step S103, the license orchestrator determines an orchestrating strategy such as an on-demand allocating strategy, an on-plan allocating strategy and the like.

Step S103 may be performed before step S101 or step S102.

At step S104, a variation of current capacity of a network element is monitored.

For each group of VNF instances, the change of current capacity of the VNF may be monitored through manners such as actively polling, or actively reporting by VNF, or performance statistics.

At step S105, if a VNF instance in the VNF group reaches an upper limit of the license resource limit, a new license resource is determined for the VNF instance and the license resource shared by the VNF group is reallocated between the VNF instances in the group.

At step S106, if the license orchestrator has the authority to make licenses, the new "licesne" resource is authorized. That is, a new license is made and distributed to the corresponding VNF instance.

The license made by the license orchestrator may be in the form of a file or an encrypted message. When distributed, the license may be actively acquired by VNF instance, or the license may be directly or indirectly sent to the VNF instance by the license orchestrator.

At step S107, the VNF instance acquires the "licesne" from the license orchestrator. After the "licesne" is validated, the VNF instance continues to operate normally.

### Application example 2

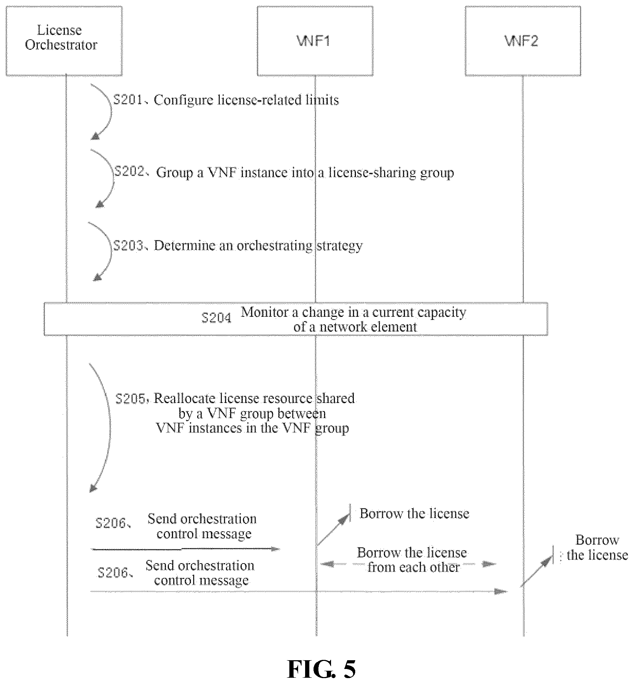

In this application example, the license orchestrator only allocates the license resource and does not make any license, and is applicable to a case where the license orchestrator manages the VNF licenses from multiple manufacturers. In the case where the license orchestrator does not have the authority to make licenses, the collaboration flowchart is shown in FIG. 5.

At step S201, in the license orchestrator, each VNF instance is allocated a license and relevant limits (such as the corresponding capacity limit) of each licesne are configured. If the relevant limit is reached, it is necessary to replaced with a new license to obtain more resource.

At step S202, the license orchestrator groups the VNFs using these "licesne", such that the VNF instances sharing the license may be grouped to a VNF group, referred as "licesne" sharing diagram in the drawings.

At step S203, the license orchestrator determines the orchestrating strategy.

At step S204, a change in a current capacity of a network element is monitored.

With respect to each group of VNF instances, the change of the current capacity of the VNF may be monitored through manners such as actively polling, or actively reporting by VNF, or performance statistics.

At step S205, when a VNF instance in the VNF group reaches the upper limit of the license resource limit, the new license resource of this VNF instance is determined. The license resource shared by the VNF group is reallocated between the VNF instances in the VNF group. During the reallocation, the license resource is borrowed between the VNFs.

At step S206, the license orchestrator sends a notification message such as an orchestration control message as shown in the drawings, which carries the reallocated VNF license resource information.

In the drawings, the notification messages sent to VNF1 and VNF2 by the license orchestrator instructs VNF1 and VNF2 to borrow license resource from each other.

After the inter-VNFs borrowing is completed, each related network element license may be loaded and validated with the new license, and the license is made by the VNF instance.

### Application example 3

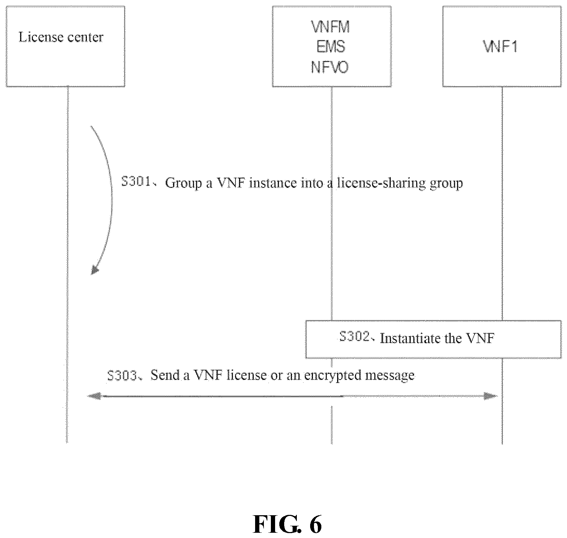

The present example illustrates a process of allocating the license resource when a new VNF instance is added. The collaboration flowchart is shown in FIG. 6.

At step S301, when there is an idle license resource in the license orchestrator and a requirement for adding a new VNF instance, the new added VNF instance is grouped into the VNF group ("licesne" sharing group) capable of sharing the license resource. If the idle resource in the license resource shared by the VNF group can meet the resource requirement of the new added VNF instance, the idle capacity is directly allocated; if the idle capacity is insufficient, the license resource may be purchased again, imported and reserved for the VNF instance; or the idle part of the license resources of other VNFs in the VNF group is allocated to the new VNF instance.

### At step S302, the VNF is instanced.

At step S303, the new added network element VNF1 acquires the license resource from the license orchestrator, and the license resource is loaded and validated. The license resource may be directly acquired from the license orchestrator, or may be indirectly acquired via other intermediates, may be directly sent by the license orchestrator, or may be actively downloaded. The acquisition manner is not limited herein.

### Application example 4

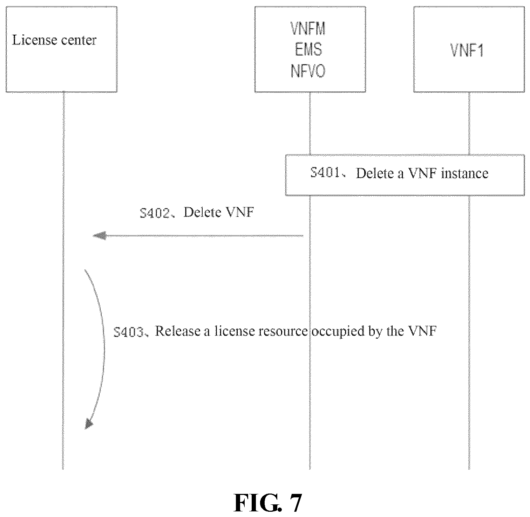

This application example is a process of recovering license resource when a VNF instance is deleted. As shown in FIG. 7, the collaboration flowchart includes the following steps.

At step S401, terminating the VNF instance by the NFVO/VNFM/EMS is completed and the VNF instance is deleted.

At step S402, the NFVO/VNFM/EMS notifies the license orchestrator that the VNF instance has been deleted.

At step S403, the license orchestrator recovers the license resource occupied by this VNF instance.

The above embodiments can be applied in a telecom virtualization system license management. After network functions are virtualized, the VNF instances can be flexibly scaled. The VNF capacity changes constantly according to actual needs.

The sequence numbers of the foregoing embodiments of the present invention are merely for the purpose of description and do not represent the advantages and disadvantages of the embodiments. Through the above description of the embodiments, those skilled in the art can clearly understand that the methods in the above embodiments may be implemented by means of software plus a necessary universal hardware platform, of course, also may be implemented through hardware, but in many cases, the former is a better implementation. Based on this understanding, the embodiments of the present invention essentially or the part contributing to the related art may be embodied in the form of a software product which is stored in a storage medium (such as a ROM/RAM, a magnetic A disc, an optical disc) and includes several instructions for enabling a terminal device (such as a mobile phone, a computer, a server, or a network device) to execute the method described in each embodiment of the present application.

### Industrial Applicability

The present disclosure allows the license resource to be shared between the plurality of VNFs, thereby saving the planning, maintenance and purchase costs of a license.

## Claims

1. A method for sharing a license resource between multiple Virtual Network Functions, VNF, with the method being applied to a license orchestrator, wherein the method comprises:
grouping (110) a plurality of VNF instances sharing the license resource into a VNF group; and
performing at least one of: allocating and reallocating (120) the license resource shared by the VNF group between the plurality of VNF instances in the VNF group;
wherein the method further comprises:
monitoring a current capacity of the each of the plurality of VNF instances in the VNF group,
wherein the reallocating the license resource shared by the VNF group between the plurality of VNF instances in the VNF group comprises:
allocating, if the current capacity of one of the VNF instances in the VNF group reaches an upper limit limited by the license resource thereof, a new license resource for the one of the VNF instances,
wherein a new added part of the new license resource with respect to an original license resource is obtained from at least one of: an idle resource of the license resource shared by the VNF group, an idle part of a license resource of other VNF instances in the VNF group, and a new purchased license resource.

2. The method according to claim 1, wherein the allocating the license resource shared by the VNF group between the plurality of VNF instances in the VNF group comprises:
determining a license resource to be allocated for each of the plurality of VNF instances in the VNF group, based on the current capacity of the each of the plurality of VNF instances;
or
determining a license resource to be allocated for each of the plurality of VNF instances in the VNF group, based on a planning for a total capacity of the license resource shared by the VNF group.

3. The method according to claim 1, wherein the reallocating the license resource shared by the VNF group between the plurality of VNF instances in the VNF group comprises:
allocating, when a new VNF instance is added to the VNF group, a license resource for the new VNF instance firstly,
wherein the firstly allocated license resource is obtained from at least one of: the idle resource of the license resource shared by the VNF group, the idle part of the license resource of other VNF instances in the VNF group, and the new purchased license resource.

4. The method according to any of claims 1 to 3, after allocating or reallocating the license resource shared by the VNF group between the plurality of VNF instances in the VNF group, the method further comprising:
making licenses according to license resources allocated or reallocated for the plurality of VNF instances in the VNF group, and distributing the licenses to respective VNF instances; or
generating license resource notification messages according to license resources allocated or reallocated for the plurality of VNF instances in the VNF group, and sending the license resource notification message to respective VNF instances.

5. The method according to any of claims 1 to 3, further comprising:
when it is informed that a VNF instance is deleted, recovering a license resource occupied by the deleted VNF instance.

6. The method according to any of claims 1 to 3, wherein the license orchestrator is deployed in at least one of: an Operation Support System, OSS, a Network Function Virtualization Orchestrator, NFVO, a Virtualized Network Function Manager, VNFM, a Network Element Manager, EM, or a new added entity.

7. The method according to any of claims 1 to 3, wherein the plurality of VNF instances sharing the license resource belong to a same manufacturer.

8. The method according to any of claims 1 to 3, wherein the plurality of VNF instances sharing the license resource have a same network function.

9. The method according to any of claims 1 to 3, wherein the plurality of VNF instances sharing the license resource belong to a same manufacturer and have a same network function.

10. A license orchestrator, comprising:
a grouping module (10) configured to group a plurality of VNF instances sharing a license resource into a VNF group; and
an orchestrating module (20) configured to perform at least one of: allocating and reallocating the license resource shared by the VNF group between the plurality of VNF instances in the VNF group;
wherein the license orchestrator further comprises:
a monitoring module (30) configured to monitor current capacities of the plurality of VNF instances in the VNF group;
wherein the orchestrating module (20) is configured to perform reallocating the license resource shared by the VNF group between the plurality of VNF instances in the VNF group by:
allocating, if a current capacity of one of the VNF instances in the VNF group reaches an upper limit limited by the license resource thereof, a new license resource for the one of the VNF instances, wherein a new added part of the new license resource with respect to an original license resource is obtained from at least one of: an idle resource of the license resource shared by the VNF group, an idle part of a license resource of other VNF instances in the VNF group, and a new purchased license resource.

11. The license orchestrator according to claim 10, wherein the orchestrating module (20) is configured to perform allocating the license resource shared by the VNF group between the plurality of VNF instances in the VNF group by:
determines a license resource to be allocated for each of the plurality of VNF instances in the VNF group, based on a current capacity of the each of the VNF instances;
or
determines a license resource to be allocated for the each of the plurality of VNF instances in the VNF group, based on a planning for a total capacity of the license resource shared by the VNF group.

12. The license orchestrator according to claim 10, wherein the orchestrating module (20) is configured to perform reallocating the license resource shared by the VNF group between the plurality of VNF instances in the VNF group by:
allocating, when a new VNF instance is added to the VNF group, a license resource for the new VNF instance firstly,
wherein the firstly allocated license resource is obtained from at least one of: the idle resource of the license resource shared by the VNF group, the idle part of the license resource of other VNF instances in the VNF group or the new purchased license resource.

13. The license orchestrator according to any of claims 10 to 12, further comprising: a sending module (40) configured to:
make licenses according to license resources allocated or reallocated for the plurality of VNF instances in the VNF group, and distribute the licenses to respective VNF instances; or
generate license resource notification messages according to the license resource allocated or reallocated for the plurality of VNF instances in the VNF group, and send the license resource notification messages to respective VNF instances.

14. The license orchestrator according to any of claims 10 to 12, further comprising: a recovering module configured to recovery, when it is informed that a VNF instance is deleted, a license resource occupied by the deleted VNF instance.

15. A computer-readable storage medium storing a computer-executable instruction which, when executed by a processor, cause the processor to perform a method according to any one of claims 1 to 9.

## Patentansprüche

1. Verfahren zum Teilen einer Lizenzressource zwischen multiplen Virtuellen Netzwerk-Funktionen VNF, wobei das Verfahren auf einen Lizenzkoordinator angewendet wird, wobei das Verfahren umfasst:
Zusammenfassen (110) einer Vielzahl von VNF-Instanzen, die die Lizenzressource in einer VNF-Gruppe teilen; und
Durchführen wenigstens entweder: des Zuteilens oder des erneuten Zuteilens (120) der Lizenzressource, die von der VNF-Gruppe zwischen der Vielzahl von VNF-Instanzen in der VNG-Gruppe geteilt wird;
wobei das Verfahren weiterhin umfasst:
Überwachen einer Aktuellen Kapazität jeder der Vielzahl von VNF-Instanzen in der VNF-Gruppe,
wobei die Neuzuteilung der Lizenzressource, die von der VNF-Gruppe zwischen der Vielzahl von VNF-Instanzen in der VNF-Gruppe geteilt wird, umfasst:
Zuteilen einer neuen Lizenzressource für die eine der VNF-Instanzen, wenn die Aktuelle Kapazität der einen der VNF-Instanzen in der VNF-Gruppe eine obere Grenze erreicht, die von deren Lizenzressource begrenzt wird,
wobei ein neuer, hinzugefügter Teil der neuen Lizenzressource in Bezug auf eine ursprüngliche Lizenzressource erhalten wird von wenigstens: einer Leerlaufressource der Lizenzressource, die von der VNF-Gruppe geteilt wird, einem Leerlaufteil einer Lizenzressource der anderen VNF-Instanzen in der VNF-Gruppe und einer neuen gekauften Lizenzressource.

2. Verfahren gemäß Anspruch 1, bei dem die Zuordnung der Lizenzressource, die von der VNF-Gruppe geteilt wird, zwischen der Vielzahl von VNF-Instanzen in der VNF-Gruppe umfasst:
Bestimmen einer Lizenzressource, die für jede der Vielzahl von VNF-Instanzen in der VNF-Gruppe basierend auf der aktuellen Kapazität jeder der Vielzahl von VNF-Instanzen zuzuordnen ist;
oder
Bestimmen einer Lizenzressource, die für jede der Vielzahl von VNF-Instanzen in der VNF-Gruppe zuzuordnen ist, basierend auf einer Planung für eine Gesamtkapazität der Lizenzressource, die von der VNF-Gruppe geteilt wird.

3. Verfahren gemäß Anspruch 1, wobei die Neuzuordnung der Lizenzressource, die von der VNF-Gruppe zwischen der Vielzahl von VNF-Instanzen in der VNF-Gruppe geteilt wird, umfasst:
Zuordnen einer Lizenzressource für die neue VNF-Instanz zuerst, wenn eine neue VNF-Instanz zu der VNF-Gruppe hinzugefügt wird,
wobei die zuerst zugeordnete Lizenzressource erhalten wird wenigstens von: der Leerlaufressource der Lizenzressource, die von der VNF-Gruppe geteilt wird, dem Leerlaufteil der Lizenzressource der anderen VNF-Instanzen in der VNF-Gruppe und der neuen gekauften Lizenzressource.

4. Verfahren gemäß irgendeinem der Ansprüche 1 bis 3, bei dem das Verfahren nach dem Zuordnen oder Neuzuordnen der Lizenzressource, die von der VNF-Gruppe zwischen der Vielzahl von VNF-Instanzen in der VNF-Gruppe geteilt wird, weiterhin umfasst:
Herstellen von Lizenzen gemäß den Lizenzressourcen, die für die Vielzahl von VNF-Instanzen in der VNF-Gruppe zugeordnet oder neu zugeordnet werden, und Verteilen der Lizenzen an jeweilige VNF-Instanzen; oder
Erzeugen von Lizenzressourcen-Benachrichtigungsnachrichten gemäß Lizenzressourcen, die für die Vielzahl von VNF-Instanzen in der VNF-Gruppe zugeordnet oder neu zugeordnet werden, und Senden der Lizenzressourcen-Benachrichtigungsnachricht an jeweilige VNF-Instanzen.

5. Verfahren gemäß irgendeinem der Ansprüche 1 bis 3, weiterhin umfassend:
Zurückgewinnen einer Lizenzressource, die von der gelöschten VNF-Instanz belegt wird, wenn sie informiert wird, dass eine VNF-Instanz gelöscht ist.

6. Verfahren gemäß irgendeinem der Ansprüche 1 bis 3, bei dem der Lizenzkoordinator eingesetzt wird in wenigstens entweder: einem Betriebsunterstützungssystem OSS, einem Netzwerkfunktions-Virtualisierungskoordinator NFVO, einem Virtualisierten Netzwerkfunktions-Manager VNFM, einem Netzwerkelement-Manager EM oder einer neuen hinzugefügten Einheit.

7. Verfahren gemäß irgendeinem der Ansprüche 1 bis 3, bei dem die Vielzahl von VNF-Instanzen, die die Lizenzressource teilen, zu demselben Hersteller gehört.

8. Verfahren gemäß einem der Ansprüche 1 bis 3, bei dem die Vielzahl von VNF-Instanzen, die die Lizenzressource teilen, eine und dieselbe Netzwerkfunktion aufweist.

9. Verfahren gemäß irgendeinem der Ansprüche 1 bis 3, bei dem die Vielzahl von VNF-Instanzen, die die Lizenzressource teilen, zu einem und demselben Hersteller gehört und eine und dieselbe Netzwerkfunktion aufweist.

10. Lizenzkoordinator, umfassend:
ein Zusammenfassungsmodul (10), das zum Zusammenfassen einer Vielzahl von VNF-Instanzen ausgestaltet ist, das eine Lizenzressource in einer VNF-Gruppe teilt; und
ein Koordinatormodul (20), das zum Durchführen ausgestaltet ist von wenigstens: Zuordnen und Neuzuordnen der Lizenzressource, die von der VNF-Gruppe zwischen der Vielzahl von VNF-Instanzen in der VNF-Gruppe geteilt wird;
wobei der Lizenzkoordinator weiterhin umfasst:
ein Überwachungsmodul (30), das zum Überwachen von aktuellen Kapazitäten der Vielzahl von VNF-Instanzen in der VNF-Gruppe ausgestaltet ist;
wobei das Koordinatormodul (20) ausgestaltet ist, um die Neuzuordnung der Lizenzressource durchzuführen, die von der VNF-Gruppe zwischen der Vielzahl von VNF-Instanzen in der VNF-Gruppe geteilt wird, durch:
Zuordnen einer neuen Lizenzressource für die eine der VNF-Lizenzen, wenn eine aktuelle Kapazität der VNF-Instanzen in der VNF-Gruppe eine obere Grenze erreicht, die von deren Lizenzressource begrenzt wird, wobei ein neuer hinzugefügter Teil der neuen Lizenzressource in Bezug auf eine ursprüngliche Lizenzressource erhalten wird von wenigstens: einer Leerlaufressource der Lizenzressource, die von der VNF-Gruppe geteilt wird, einem Leerlaufteil einer Lizenzressource von anderen VNF-Instanzen in der VNF-Gruppe und einer neuen gekauften Lizenzressource.

11. Lizenzkoordinator gemäß Anspruch 10, wobei das Koordinatormodul (20) ausgestaltet ist, um das Zuordnen der Lizenzressource durchzuführen, die von der VNF-Gruppe zwischen der Vielzahl von VNF-Instanzen in der VNF-Gruppe geteilt wird, durch:
Bestimmen einer Lizenzressource, die für jede der Vielzahl von VNF-Instanzen in der VNF-Gruppe zuzuordnen ist, basierend auf einer aktuellen Kapazität jeder der VNF-Instanzen;
oder
Bestimmen einer Lizenzressource, die für jede der Vielzahl von VNF-Instanzen in der VNF-Gruppe zuzuordnen ist, basierend auf einer Planung für eine Gesamtkapazität der Lizenzressourcen, die von der VNF-Gruppe geteilt werden.

12. Lizenzkoordinator gemäß Anspruch 10, wobei das Koordinatormodul (20) ausgestaltet ist, um das Neuzuordnen der Lizenzressource durchzuführen, die von der VNF-Gruppe zwischen der Vielzahl von VNF-Instanzen in der VNF-Gruppe geteilt wird, durch:
Zuordnen einer Lizenzressource für die neue VNF-Instanz zuerst, wenn eine neue VNF-Instanz zu der VNF-Gruppe hinzugefügt wird,
wobei die zuerst zugeordnete Lizenzressource erhalten wird wenigstens von: der Leerlaufressource der Lizenzressource, die von der VNF-Gruppe geteilt wird, dem Leerlaufteil der Lizenzressource der anderen VNF-Instanzen in der VNF-Gruppe oder der neuen gekauften Lizenzressource.

13. Lizenzkoordinator gemäß irgendeinem der Ansprüche 10 bis 12, weiterhin umfassend: ein Sendemodul (40), das ausgestaltet ist zum:
Herstellen von Lizenzen gemäß Lizenzressourcen, die für die Vielzahl von VNF-Instanzen in der VNF-Gruppe zugeordnet oder neu zugeordnet werden, und Verteilen der Lizenzen an jeweilige VNF-Instanzen; oder
Erzeugen von Lizenzressourcen-Benachrichtigungsnachrichten gemäß der Lizenzressource, die für die Vielzahl von VNF-Instanzen in der VNF-Gruppe zugeordnet oder neu zugeordnet werden, und Senden der Lizenzressourcen-Benachrichtigungsnachrichten an jeweilige VNF-Instanzen.

14. Lizenzkoordinator gemäß irgendeinem der Ansprüche 10 bis 12, weiterhin umfassend: ein Rückgewinnungsmodul, das zum Rückgewinnen einer Lizenzressource, die von der gelöschten VNF-Instanz belegt wird, ausgestaltet ist, wenn es informiert wird, dass eine VNF-Instanz gelöscht ist.

15. Computerlesbares Speichermedium, das eine computerausführbare Anweisung speichert, wenn sie von einem Prozessor ausgeführt wird, den Prozessor veranlasst, ein Verfahren gemäß irgendeinem der Ansprüche 1 bis 9 durchzuführen.

## Revendications

1. Procédé pour partager une ressource de licence entre de multiples fonctions de réseau virtuel, VNF, le procédé étant appliqué à un orchestrateur de licence, dans lequel le procédé consiste à :
grouper (110) une pluralité d'instances de VNF partageant la ressource de licence en un groupe de VNF ; et
effectuer au moins une parmi : l'attribution et la réattribution (120) de la ressource de licence partagée par le groupe de VNF entre la pluralité d'instances de VNF du groupe de VNF ;
dans lequel le procédé consiste en outre à :
surveiller une capacité actuelle de chacune de la pluralité d'instances de VNF du groupe de VNF,
dans lequel la réattribution de la ressource de licence partagée par le groupe de VNF entre la pluralité d'instances de VNF du groupe de VNF comprend :
l'attribution, si la capacité actuelle de l'une des instances de VNF du groupe de VNF atteint une limite supérieure limitée par la ressource de licence de celle-ci, d'une nouvelle ressource de licence pour la une des instances de VNF,
dans lequel une nouvelle partie ajoutée de la nouvelle ressource de licence par rapport à une ressource de licence d'origine est obtenue à partir d'au moins une parmi : une ressource inactive de la ressource de licence partagée par le groupe de VNF, une partie inactive d'une ressource de licence d'autres instances de VNF du groupe de VNF et une nouvelle ressource de licence achetée.

2. Procédé selon la revendication 1, dans lequel l'attribution de la ressource de licence partagée par le groupe de VNF entre la pluralité d'instances de VNF du groupe de VNF consiste à :
déterminer une ressource de licence à attribuer pour chacune de la pluralité d'instances de VNF du groupe de VNF, sur la base de la capacité actuelle de chacune de la pluralité d'instances de VNF ;
ou
déterminer une ressource de licence à attribuer pour chacune de la pluralité d'instances de VNF du groupe de VNF, sur la base d'une planification pour une capacité totale de la ressource de licence partagée par le groupe de VNF.

3. Procédé selon la revendication 1, dans lequel la réattribution de la ressource de licence partagée par le groupe de VNF entre la pluralité d'instances de VNF du groupe de VNF consiste à :
attribuer, lorsqu'une nouvelle instance de VNF est ajoutée au groupe de VNF, une ressource de licence pour la nouvelle instance de VNF premièrement,
dans lequel la ressource de licence premièrement attribuée est obtenue à partir d'au moins une parmi : la ressource inactive de la ressource de licence partagée par le groupe de VNF, la partie inactive de la ressource de licence d'autres instances de VNF du groupe de VNF et la nouvelle ressource de licence achetée.

4. Procédé selon l'une quelconque des revendications 1 à 3, après attribution ou réattribution de la ressource de licence partagée par le groupe de VNF entre la pluralité d'instances de VNF du groupe de VNF, le procédé consistant en outre à :
créer des licences selon des ressources de licence attribuées ou réattribuées pour la pluralité d'instances de VNF du groupe de VNF, et distribuer les licences à des instances de VNF respectives ; ou
générer des messages de notification de ressources de licence selon des ressources de licence attribuées ou réattribuées pour la pluralité d'instances de VNF du groupe de VNF, et envoyer le message de notification de ressources de licence à des instances de VNF respectives.

5. Procédé selon l'une quelconque des revendications 1 à 3, consistant en outre à :
lorsque l'on est informé qu'une instance de VNF est supprimée, récupérer une ressource de licence occupée par l'instance de VNF supprimée.

6. Procédé selon l'une quelconque des revendications 1 à 3, dans lequel l'orchestrateur de licence est déployé dans au moins un parmi : un système de support d'exploitation, OSS, un orchestrateur de virtualisation de fonction de réseau, NFVO, un gestionnaire de fonction de réseau virtualisée, VNFM, un gestionnaire d'élément de réseau, EM, ou une nouvelle entité ajoutée.

7. Procédé selon l'une quelconque des revendications 1 à 3, dans lequel la pluralité d'instances de VNF partageant la ressource de licence appartiennent à un même fabricant.

8. Procédé selon l'une quelconque des revendications 1 à 3, dans lequel la pluralité d'instances de VNF partageant la ressource de licence ont une même fonction de réseau.

9. Procédé selon l'une quelconque des revendications 1 à 3, dans lequel la pluralité d'instances de VNF partageant la ressource de licence appartiennent à un même fabricant et ont une même fonction de réseau.

10. Orchestrateur de licence, comprenant :
un module de groupement (10) configuré pour grouper une pluralité d'instances de VNF partageant une ressource de licence en un groupe de VNF ; et
un module d'orchestration (20) configuré pour effectuer au moins une parmi : l'attribution et la réattribution de la ressource de licence partagée par le groupe de VNF entre la pluralité d'instances de VNF du groupe de VNF ;
dans lequel l'orchestrateur de licence comprend en outre :
un module de surveillance (30) configuré pour surveiller des capacités actuelles de la pluralité d'instances de VNF du groupe de VNF ;
dans lequel le module d'orchestration (20) est configuré pour effectuer une réattribution de la ressource de licence partagée par le groupe de VNF entre la pluralité d'instances de VNF du groupe de VNF en :
attribuant, si une capacité actuelle d'une des instances de VNF du groupe de VNF atteint une limite supérieure limitée par la ressource de licence de celle-ci, une nouvelle ressource de licence pour la une des instances de VNF, dans lequel une nouvelle partie ajoutée de la nouvelle ressource de licence par rapport à une ressource de licence d'origine est obtenue à partir d'au moins une parmi : une ressource inactive de la ressource de licence partagée par le groupe de VNF, une partie inactive d'une ressource de licence d'autres instances de VNF du groupe de VNF, et une nouvelle ressource de licence achetée.

11. Orchestrateur de licence selon la revendication 10, dans lequel le module d'orchestration (20) est configuré pour effectuer une attribution de la ressource de licence partagée par le groupe de VNF entre la pluralité d'instances de VNF du groupe de VNF en :
déterminant une ressource de licence à attribuer pour chacune de la pluralité d'instances de VNF du groupe de VNF, sur la base d'une capacité actuelle de chacune des instances de VNF ;
ou
déterminant une ressource de licence à attribuer pour chacune de la pluralité d'instances de VNF du groupe de VNF, sur la base d'une planification pour une capacité totale de la ressource de licence partagée par le groupe de VNF.

12. Orchestrateur de licence selon la revendication 10, dans lequel le module d'orchestration (20) est configuré pour effectuer une réattribution de la ressource de licence partagée par le groupe de VNF entre la pluralité d'instances de VNF du groupe de VNF en :
attribuant, lorsqu'une nouvelle instance de VNF est ajoutée au groupe de VNF, une ressource de licence pour la nouvelle instance de VNF premièrement,
dans lequel la ressource de licence premièrement attribuée est obtenue à partir d'au moins une parmi : la ressource inactive de la ressource de licence partagée par le groupe de VNF, la partie inactive de la ressource de licence d'autres instances de VNF du groupe de VNF, ou la nouvelle ressource de licence achetée.

13. Orchestrateur de licence selon l'une quelconque des revendications 10 à 12, comprenant en outre : un module d'envoi (40) configuré pour :
créer des licences selon des ressources de licence attribuées ou réattribuées pour la pluralité d'instances de VNF du groupe de VNF, et distribuer les licences aux instances de VNF respectives ; ou
générer des messages de notification de ressources de licence selon la ressource de licence attribuée ou réattribuée pour la pluralité d'instances de VNF du groupe de VNF, et envoyer les messages de notification de ressources de licence à des instances de VNF respectives.

14. Orchestrateur de licence selon l'une quelconque des revendications 10 à 12, comprenant en outre : un module de récupération configuré pour récupérer, lorsque l'on est informé qu'une instance de VNF est supprimée, une ressource de licence occupée par l'instance de VNF supprimée.

15. Support de stockage lisible par ordinateur stockant une instruction exécutable par ordinateur qui, lorsqu'elle est exécutée par un processeur, amène le processeur à effectuer un procédé selon l'une quelconque des revendications 1 à 9.
